# FASCICULE DE BREVET EUROPEEN

(11) **EP 3 559 726 B1**
(45) Date de publication et mention de la délivrance du brevet: **03.03.2021**
(21) Numéro de dépôt: 17832263.2
(22) Date de dépôt: 21.12.2017
(51) Int. Cl.: G02B 27/01

(54) **LUNETTES AVEC SYSTEME OPTIQUE D'AFFICHAGE**
BRILLE MIT OPTISCHEM ANZEIGESYSTEM
SPECTACLES WITH OPTICAL DISPLAY SYSTEM

(30) Priorité: 22.12.2016 FR 1663159
(43) Date de publication de la demande: 30.10.2019
(73) Titulaire: Microoled, 38000 Grenoble Cedex 9 (FR)
(72) Inventeur: MARCELLIN-DIBON, Eric, 92420 Vaucresson (FR); BOUBEL, François, 38120 Saint-Egrève (FR); TURQUET, Antoine Simon, 38100 Grenoble (FR); SIOURAKAN, Cédric, 38000 Grenoble (FR); RENAUD-GOUD, Philippe, 38000 Grenoble (FR)
(74) Mandataire: Schmidt, Martin Peter
(86) Numéro de dépôt international: PCT/FR2017/053764
(87) Numéro de publication internationale: WO 2018/115762

(56) Documents cités:
- EP-A1- 2 698 662
- EP-A1- 2 698 662
- WO-A1-2016/135727
- FR-A1- 2 515 832
- FR-A1- 3 017 966
- US-A1- 2003 184 868
- US-A1- 2013 222 214
- US-A1- 2013 222 214
- US-A1- 2016 306 171
- US-B1- 6 394 601
- US-B1- 6 394 601

## Description

### Domaine technique de l'invention

L'invention concerne le domaine des systèmes optiques, et plus particulièrement des systèmes optiques d'affichage intégrés dans un casque ou une paire de lunettes (appelés « lunettes connectées »).

### Etat de la technique

On connait divers modèles de visiocasques permettant de visualiser une « réalité virtuelle », tel que le système Oculus Rift™ qui est dans le commerce. Ils sont encombrants et ne permettent pas en même temps une vision de l'environnement extérieure. On connaît également des casques à affichage dit tête haute, qui permettent en même temps une vision de la réalité extérieure. On connaît également et de lunettes dites connectées avec système optique d'affichage. Les principes optiques de ces dispositifs sont présentés dans l'article « Head-Worn Displays : A Review» par O. Cakmakci et J. Rolland, paru en 2006 dans Journal of Display Technology 2 (3), p. 199-921. Un grand nombre de documents brevets proposent des configurations différentes.

Ces lunettes sont en règle générale assez encombrantes et lourdes. Elles représentent des objets spécifiques qui ne se prêtent pas à un usage courant. Leur design diffère très significativement de celui des lunettes de type courant, qu'il s'agisse de lunettes avec des verres correcteurs ou de lunettes de soleil. A titre d'exemple, les documents WO 2016/135 727 (Elbit Systems) et US 2009/0231 722 (Day & Night Display Systems) proposent de positionner le système d'affichage de manière horizontale au-dessus de la racine du nez. Ce positionnement est incompatible avec des lunettes de type courant. Des lunettes avec des guides d'ondes dans les branches ont été décrites dans WO 2015/075206 (Carl Zeiss Optics) ; elles nécessitent l'utilisation d'un ensemble de prismes pour extraire la lumière des verres de lunettes qui dégradent la vision en transparence.

Plusieurs documents décrivent des afficheurs intégrés dans des lunettes dont les montures sont plus proches de celles des lunettes de vue de type courant.

Le document FR 3 017 966 (O. Cecconi) propose d'intégrer un micro-écran dans chacune des deux plaquettes destinées à tenir la monture sur le nez ; chaque écran projette une image dans l'œil du porteur des lunettes par l'intermédiaire du dioptre intérieure (arrière) du verre de lunettes, qui doit alors présenter une courbure bien spécifique.

Le document US 2003/0184 868 (Geist) décrit un système dans lequel l'afficheur, disposé sur la branche d'une paire de lunettes, envoie une image sur un premier miroir fixé sur une des plaquettes des lunettes, puis sur un deuxième miroir fixé sur le verre de lunettes, d'où l'image est projeté dans l'œil de l'utilisateur. Ce deuxième miroir, proche de la plaquette, est loin du centre du verre des lunettes, ce qui nécessite un mouvement important des yeux pour regarder l'image émanant du système.

Le document US 6,394,601 (Bettinger) décrit le schéma d'un système comprenant un afficheur, fixé sur la partie haute du verre de lunettes avec sa surface émettrice orientée perpendiculairement au plan du verre, qui envoie une image sur un miroir situé en partie basse du verre, d'où l'image est réfléchie dans l'œil de l'utilisateur. Aucun exemple concret n'est montré, et on peut penser que l'afficheur situé en bordure supérieure des verres de lunettes est assez encombrant. Ce système présente également l'inconvénient que l'image est toujours perçue en périphérie du verre des lunettes, ce qui nécessite des mouvements des yeux qui gênent la vision attentive de l'environnement. Les documents US2013/0222214 A1 et EP2698662 A1 décrivent des lunettes employant un afficheur et un miroir.

Le problème que la présente invention cherche à résoudre est de présenter un système de lunettes dans lequel le système optique permettant l'affichage est conçu pour réduire l'espace occupé par le système optique assurant la fonction d'affichage, tout en gardant au mieux les caractéristiques habituelles (dimension, encombrement, légèreté, courbure des verres, monture, design) d'une paire de lunettes de type courant, et notamment d'une paire de lunettes de type sport, et de ne pas gêner la vision de l'environnement.

### Objet de l'invention

L'invention se base sur une « paire de lunettes » présentant au moins une unité optique de type verre de lunettes comprenant une face définissant un passage pour le nez de l'utilisateur et des moyens de fixation sur la tête de l'utilisateur. Ladite unité optique présente un dioptre avant (ou « extérieur », vu de face) et un dioptre arrière (ou « intérieur », dirigé vers le visage de l'utilisateur). Les moyens de fixations peuvent être des branches de lunettes ou tout autre moyen approprié.

Selon l'invention ces objectifs sont atteints avec des lunettes comprenant une face pourvue d'au moins une unité optique de type verre, ladite face définissant un passage pour le nez de l'utilisateur, ledit passage pour le nez étant délimité par des premier et second bords dits internes de la face,
lesdites lunettes comprenant en outre :
- un module d'émission d'une information visuelle, comprenant un élément d'émission de ladite information visuelle de type afficheur,
- optionnellement un élément de transformation optique de ladite information visuelle émise, notamment de type lentille,
- un élément de renvoi géométrique de l'information visuelle transformée, de type miroir, apte à renvoyer ladite information visuelle transformée vers une zone cible de ladite unité optique de type verre,
ledit module d'émission étant disposé en partie basse ou haute d'un premier bord interne de la face, alors que l'élément de renvoi géométrique est disposé en partie haute ou basse dudit premier bord interne, sachant que lorsque ledit module d'émission est disposé en partie basse dudit premier bord interne de la face, alors l'élément de renvoi géométrique est disposé en partie haute dudit premier bord interne, et lorsque ledit module d'émission est disposé en partie haute d'un premier bord interne de la face, alors l'élément de renvoi géométrique est disposé en partie basse dudit premier bord interne.

Typiquement, lesdits premier et second bords internes de la face sont tournés respectivement vers des premier et second bords latéraux de la face,

Dans un mode de réalisation les lunettes comprennent des branches montées sur cette face (par exemple sur des premier et second bords latéraux de cette face), notamment de manière pivotante. Dans un autre mode de réalisation elles sont intégrées, de manière fixe ou pivotante, dans un casque de protection de la tête, notamment dans un casque de vélo de type homologué, ou dans un casque de moto de type homologué.

Avantageusement la surface principale de l'élément d'émission de type afficheur est oblique (en particulier sensiblement perpendiculaire) à la surface principale de ladite face.

L'invention utilise l'espace disponible proche de la jointure du nez pour positionner le module d'émission et/ou l'élément de renvoi géométrique. Plus particulièrement, l'un ou l'autre de ces deux dispositifs (à savoir le module d'émission ou l'élément de renvoi géométrique) peut être positionné au-dessous de l'arcade sourcilière, proche de l'os nasal, et l'autre peut être positionné proche du point lacrymal inférieur. Ce positionnement du module d'émission et de l'élément de renvoi géométrique permet de minimiser l'encombrement et la gêne qu'ils engendrent pour l'utilisateur. Ce positionnement favorise également la projection d'une image de bonne qualité avec un champ suffisamment large, et évite que la vision directe ne soit gênée par le module d'émission ou l'élément de renvoi géométrique.

Ladite zone cible est située sur le dioptre arrière de ladite unité optique. Elle est située de préférence en partie médiane dudit premier bord latéral, ce qui évite que la vision directe de l'oeil ne soit gênée par l'affichage.

Dans une mode de réalisation, ladite face comprend deux cerclages et un pontet reliant lesdits cerclages, chaque cerclage comprenant des moyens de fixation, notamment amovible, pour ladite unité optique de type verre, chaque cerclage comprenant un bord latéral et un bord interne, formant respectivement un desdits bords latéraux et un desdits bords internes de la face. Lesdits cerclages reliés par le pontet peuvent former une monture de lunettes, de type connu.

Dans une première variante (« variante 1 »), ledit module d'émission et/ou ledit élément de renvoi géométrique est monté sur le cerclage.

Dans une deuxième variante (« variante 2 »), ledit module d'émission et/ou ledit élément de renvoi géométrique n'est pas (ne sont pas) monté(s) sur le cerclage mais fixé(s) directement sur ledit verre.

Dans une troisième variante (« variante 3), pouvant être combinée avec les variantes 1 ou 2, ladite monture est conçu pour accueillir dans chaque cerclage une unité optique de type verre.

Dans une quatrième variante (« variante 4 »), pouvant être combinée avec les variantes 1 ou 2, ladite monture est conçue pour contenir une seule unité optique qui s'étend sur les deux cerclages.

Dans une cinquième variante (« variante 5 »), pouvant être combinée avec toutes les variantes précédentes, les branches et/ou le pontet sont montées directement sur lesdites (ou ladite) unité(s) optique(s).

Dans un autre mode de réalisation, ladite face comprend une unique unité optique, les bords latéraux de ladite unité optique formant lesdits bords latéraux de la face, lesdites branches étant montées directement sur les bords latéraux de ladite unité optique.

En particulier, le module d'émission peut être monté sur le cerclage, en partie basse d'un premier bord de la face, ou directement sur l'unité optique de type verre. De même, l'élément de renvoi géométrique peut être monté sur le cerclage, en partie basse d'un premier bord de la face, ou directement sur l'unité optique de type verre. Dans un mode de réalisation le module d'émission et l'élément de renvoi géométrique sont tous les deux montés sur le cerclage, est monté sur le cerclage, l'un en partie basse, l'autre en partie haute (dans une première variante le module d'émission est en partie haute, dans une deuxième variante il est en partie basse). Dans un autre mode de réalisation le module d'émission et l'élément de renvoi géométrique sont tous les deux montés sur l'unité optique de type verre (par des techniques d'assemblage connues en tant que telles), l'un en partie basse, l'autre en partie haute (dans une première variante le module d'émission est en partie haute, dans une deuxième variante il est en partie basse). Dans un autre mode de réalisation le module d'émission est monté sur le cerclage alors que l'élément de renvoi géométrique est monté sur l'unité optique de type verre, l'un en partie haute, l'autre en partie basse (dans une première variante le module d'émission est en partie haute, dans une deuxième variante il est en partie basse). Dans encore un autre mode de réalisation le module d'émission est monté sur le l'unité optique de type verre alors que l'élément de renvoi géométrique est monté sur le cerclage, l'un en partie haute, l'autre en partie basse (dans une première variante le module d'émission est en partie haute, dans une deuxième variante il est en partie basse).

Selon une caractéristique avantageuse de l'invention, ledit pontet fait partie d'un module de pontet sur lequel est fixé ledit bloc optique. Ce module de pontet comprend avantageusement une prise de connexion électrique. Ladite monture peut également comporter un élément de transformation optique de ladite information visuelle émise, notamment de type lentille ; on peut utiliser plusieurs de ces éléments, par exemple deux.

Selon une caractéristique avantageuse de l'invention, les lunettes comprennent en outre un bloc optique, ledit bloc comprenant des moyens de maintien, notamment amovible, pour le module d'émission et/ou l'élément de transformation optique et/ou l'élément de renvoi géométrique, ladite unité optique étant pourvue de moyens de positionnement, aptes à positionner ledit bloc optique par rapport à ladite unité optique.

Dans un premier mode de réalisation, les moyens de positionnement comprennent au moins un élément de positionnement venu de matière, notamment venu de moulage, avec ladite unité optique, ledit élément de positionnement étant apte à coopérer avec ledit bloc optique, notamment par une liaison de type tenon et mortaise, ou encore de type à encliquetage élastique.

Dans un autre mode de réalisation, ledit bloc optique est venu de matière, notamment venu de moulage, avec ladite unité optique.

Un autre objet de l'invention est une monture appartenant à des lunettes selon l'invention, ladite monture comprenant deux cerclages et un pontet reliant lesdits cerclages, chaque cerclage comprenant des moyens de fixation, notamment amovible, pour une unité optique de type verre, ladite monture comprenant en outre :
- un module d'émission d'une information visuelle, comprenant un élément d'émission de ladite information visuelle de type afficheur, un élément de transformation optique de ladite information visuelle émise, notamment de type lentille,
- un élément de renvoi géométrique de l'information visuelle transformée, de type miroir, apte à renvoyer ladite information visuelle transformée vers une zone cible dudit verre,
ledit module d'émission étant monté en partie basse ou haute d'un premier bord interne de la monture, alors que l'élément de renvoi géométrique est monté en partie haute ou basse dudit premier bord interne, sachant que lorsque ledit module d'émission est monté en partie basse dudit premier bord interne de la monture, alors l'élément de renvoi géométrique est monté en partie haute premier bord interne, et lorsque ledit module d'émission est monté en partie haute d'un premier bord interne de la monture, alors l'élément de renvoi géométrique est monté en partie basse dudit premier bord interne.

La zone cible est avantageusement située en partie médiane du bord latéral dudit premier cerclage. La surface principale de l'élément d'émission de type afficheur est sensiblement perpendiculaire à la surface principale dudit premier cerclage.

Avantageusement le champ total issue de l'écran (représenté par l'unité optique de type verre) permet de couvrir plusieurs positions de la pupille.

L'image fournie par le module d'émission d'une information visuelle peut être monochrome ou polychrome.

Dans un mode de réalisation qui peut être combiné avec tous les autres modes de réalisation et variantes, les lunettes comprennent un système électronique de détection de la luminosité ambiante configuré pour réguler la luminosité de l'affichage en temps réel en fonction de l'ambiance lumineuse de l'environnement.

Dans un autre mode de réalisation qui peut être combiné avec tous les autres modes de réalisation et variantes, l'élément de renvoi géométrique est monté sur un support réglable à l'aide d'un organe de commande permettant de translater le miroir de quelques micromètres en gardant de préférence un angle constant entre l'afficheur et la surface de l'unité optique de type verre.

En alternative au précédent mode de réalisation (ou de manière moins préférée, en complément au précédent mode de réalisation), c'est l'afficheur (de préférence avec son élément de transformation optique de l'information visuelle) qui est monté sur un support réglable à l'aide d'un organe de commande permettant de translater l'afficheur (de préférence avec son élément de transformation optique de l'information visuelle) de manière à pouvoir ajuster le point de focalisation et de régler la dioptrie ; cela permet de compenser au moins partiellement certains défauts visuels de l'utilisateur, tels que la myopie ou l'hypermétropie.

D'une manière générale, dans le cadre de la présente invention :
- ledit élément de transformation optique de l'information visuelle comprend avantageusement au moins une lentille, de préférence de type asphérique. Dans une variante, ledit élément de transformation optique de l'information visuelle comprend deux lentilles, de préférence asphériques, ce qui diminue l'aberration ;
- ledit élément de renvoi géométrique comprend avantageusement au moins un miroir, qui peut notamment être un miroir plan ou convexe, et qui peut avoir une forme circulaire, ovale, oblongue, rectangulaire ou carrée (de préférence avec des bords arrondis), sachant que les formes sans angles sont préférées car moins encombrantes et plus faciles intégrer au support ;
- ledit module d'émission d'une information visuelle est de préférence un afficheur de type OLED, qui peut être monochrome ou de couleur. On peut utiliser notamment un micro-afficheur tel que commercialisé par la société Microoled™ à Grenoble.
- Ledit module d'émission avec son élément de renvoi géométrique peut être placé de manière identique sur la partie gauche ou droite des lunettes ; en fonction de l'œil directeur de l'utilisateur.

Il convient de préciser que dans le cadre de la présente invention, le terme « verre » dans l'expression « unité optique de type verre » doit être compris dans le sens « verre de lunettes » et non pas comme l'indication d'un matériau spécifique : en effet, ce « verre » peut être réalisé en tout matériau approprié, tels que verre dit organique (par exemple un polycarbonate tel que l'allyl diglycol carbonate (une résine connue sous le sigle « CR-39 »)), un film plastique, un verre minéral, et peut permettre ou ne pas permettre une correction optique, et/ou peut absorber au moins une partie du spectre visible de la lumière (lunettes de soleil) ou non, et/ou peut absorber au moins une partie des rayons ultraviolets ou non, et/ou peut être coloré ou non, sachant que lesdites fonctionnalités (et d'autres, telles que la fonction anti-rayures, la fonction anti-buée, la fonction polarisante, la fonction de surface semi-réfléchissante, peuvent être intrinsèques aux matériaux de « verre » et/ou peuvent être obtenues grâce à un ou plusieurs revêtements de surface appropriés. En effet, l'unité optique de type verre utilisée dans le cadre de la présente invention peut être une unité de type connu en lunetterie.

Le mot « lunettes » est utilisé ici au pluriel pour désigner un objet au singulier (comme montré sur les figures) ou au pluriel, ce mot « lunettes » étant dérivé de l'expression « une paire de lunettes ».

### Description des figures

L'invention va être décrite ci-après, en référence aux figures 1 à 15, données uniquement à titre d'exemples non limitatifs, dans lesquels:
La figure 1 montre une vue d'en face d'un mode de réalisation des lunettes selon l'invention, intégrés dans un casque de type casque de vélo.
La figure 2 montre un autre mode de réalisation des lunettes selon l'invention, vu de l'intérieur (figure 2a), d'en face (figures 2b et 2c), et en perspective de l'intérieur (figure 2d).
La figure 3 montre un schéma simplifié de l'optique géométrique en 2D du système d'affichage des lunettes selon l'invention, pour deux inclinaisons différente du miroir.
La figure 4 montre deux vues différentes (figures 4a et 4b) d'un schéma simplifié de l'optique géométrique en 3D du système d'affichage des lunettes selon l'invention.
La figure 5 montre deux vues schématiques, simplifiées, différentes (figures 5a et 5b) d'un mode de réalisation avec deux lentilles.
La figure 6 montre les lunettes de la figure 2, avec trois zones cibles différentes, déplacées verticalement (figure 6a) ou latéralement (figure 6b).
La figure 7 monte une vue schématique d'un autre mode de réalisation selon l'invention, vu de l'intérieur.
La figure 8 montre la projection d'une grille quadratique sur la pupille, obtenue avec des lunettes selon un mode de réalisation de l'invention.
La figure 9 montre un exemple d'affichage d'informations pour des lunettes de type, obtenu avec un système d'affichage selon l'invention muni d'un afficheur de type OLED de dimension 300 x 356 pixel (surface active : 3,1 mm x 3,6 mm).
La figure 10 montre un exemple d'une unité optique de type verre de lunettes selon un mode de réalisation particulier de l'invention.
La figure 11 montre le miroir et (en coupe transversale selon un axe longitudinal) le boitier qui contient l'afficheur et la lentille, fixés sur ladite unité optique de type verre de lunettes, selon un autre mode de réalisation particulier de l'invention.
La figure 12 montre deux vues d'un module optique selon l'invention : la figure 12(a) montre une vue en coupe longitudinale, la figure 12(b) une vue en perspective avec le capot.
La figure 13 montre une vue en perspective d'un autre mode de réalisation dans lequel un module de pontet intègre le bloc optique.
La figure 14 montre deux vues d'un module de pontet intégrant un module optique : la figure 14(a) montre le module avec un support de nez amovible sur la connectique au pontet, la figure 14(b) montre le module sans le support de nez.
La figure 15 monte le module de pontet de la figure 14(b) avec un connecteur de câble branché.

Les références numériques suivantes sont utilisées dans la présente description:

| | | | |
|---|---|---|---|
| 1 | Lunettes | 18 | Bord latéral du cerclage 15 |
| 2 | Afficheur | 19 | Casque |
| 3 | Miroir | 20 | Fixation de l'afficheur 2 |
| 4 | Unité optique de type verre | 21 | Bloc optique |
| 5 | Lentille | 22 | Capot du bloc optique 21 |
| 6 | Zone cible | 23 | Entretoises |
| 7 | Œil | 24 | Eléments de positionnement et de protection |
| 8 | Boitier électronique | | |
| 9 | Fixation du miroir 3 | 25 | Support pour le nez |
| 10 | Face des lunettes | 30, 31, 32 | Eléments de positionnement mécanique |
| 11 | Moyen de fixation des lunettes 1 | | |
| 12 | Bord latéral de la face 10 | 40 | Module de pontet |
| 13 | Passage pour le nez | 41 | Support de nez amovible |
| 14 | Bord interne de la face 10 | 42 | Prise |
| 15 | Cerclage | 43 | Connecteur |
| 16 | Pontet | 44 | Boitier électronique |
| 17 | Bord interne du cerclage 15 | | |

### Description détaillée

Nous décrivons ici en plus grand détail des modes de réalisation de l'invention, notamment en relation avec les figures.

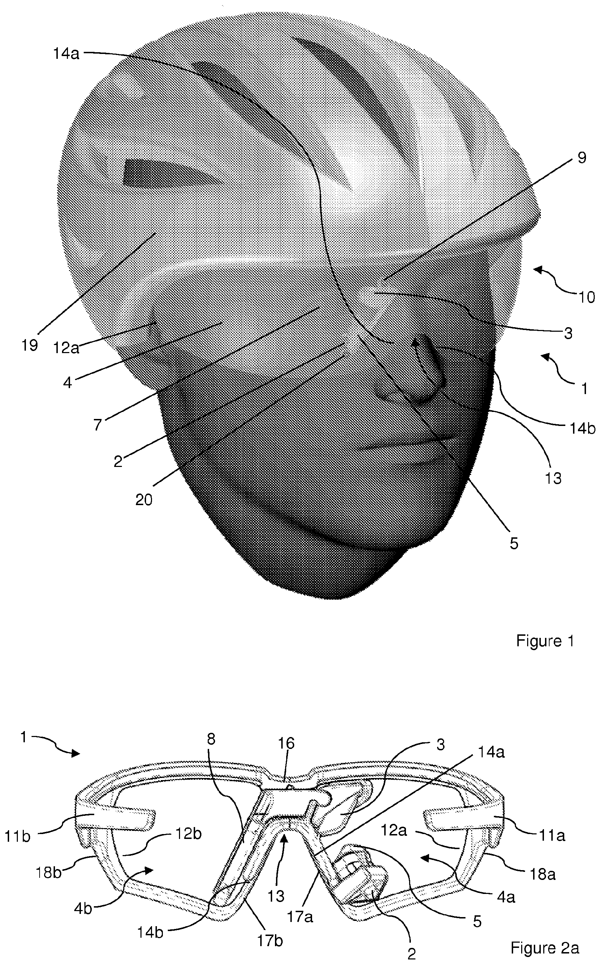

La figure 1 montre une vue d'en face d'un mode de réalisation des lunettes **1** selon l'invention, intégrés dans un casque **19** de type casque de vélo. L'unité optique **4** de type verre de lunettes présente un passage **13** pour le nez ; de ce fait elle se trouve plus proche du visage que la visière dans un casques à visière de type casque de moto. C'est cette proximité de l'unité optique **4** par rapport à l'œil **7** qui crée le besoin de disposer d'un système d'affichage compact, peu encombrant et peu gênant. Dans ce mode de réalisation, l'élément de renvoi géométrique **3** est un miroir, fixé à l'aide d'un point de fixation **9** sur l'unité optique **4** en partie haute de l'unité optique **4,** proche de l'arcade sourcilière et du nez du porteur. Le module d'émission **2** est fixé à l'aide d'un point de fixation **20** sur l'unité optique **4,** en partie basse de l'unité optique **4,** proche du nez. Un élément de transformation optique **5** se trouve dans le chemin optique qui mène du module démission **2** vers l'élément de renvoi géométrique **3.** L'image est projetée sur le dioptre intérieur de l'unité optique **4** et réfléchie dans l'œil de l'utilisateur.

Dans ce mode de réalisation, l'unité optique **4** est fixée directement sur le casque **19.** Le moyen de fixation peut être une rainure aménagée dans la partie inférieure du casque, dans laquelle est inséré le bord supérieur de l'unité optique sur toute sa longueur, ou encore (comme dans le casque montré sur le modèle communautaire n° 000 175 955-0001) une charnière de chaque côté qui relie l'unité optique **4** de manière basculante au casque **19** de manière à ce qu'elle puisse être ouverte en basculant vers le haut.

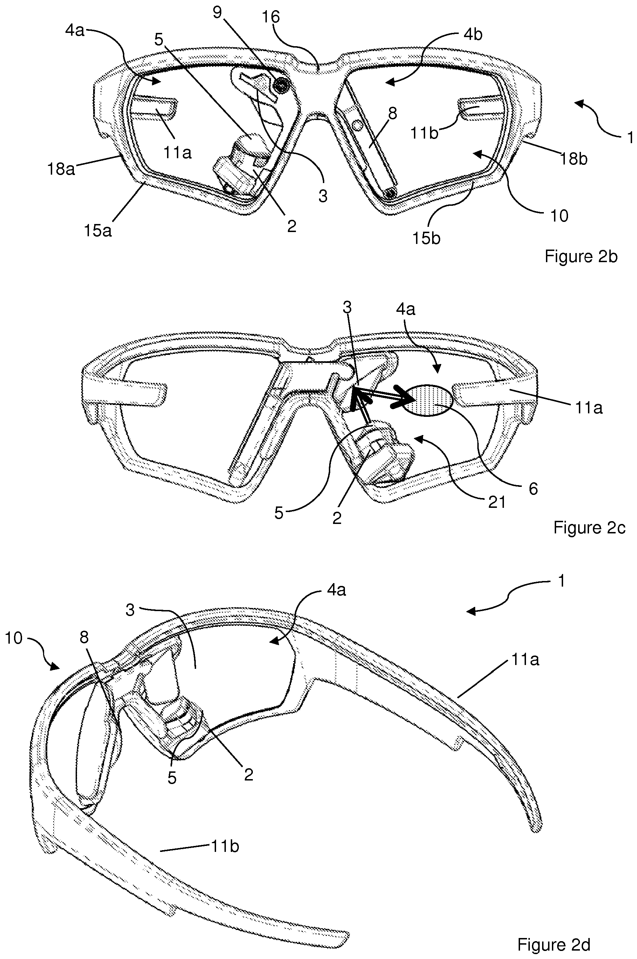

Les figures 2a,2b,2c et 2d montrent un autre mode de réalisation qui se base sur une paire de lunettes de forme courante. La figure 2a est une vue par derrière (i.e. vue de l'utilisateur), la figure 2b une vue d'en face, la figure 2d une vue en perspective par derrière, et la figure 2c est similaire à la figure 2a, mais avec des flèches représentant le chemin optique de l'image représentant l'information visuelle émise, et une zone grisée représentant la zone cible **6** sur laquelle cette information visuelle est projetée sur l'intérieur de l'unité optique **4a** représentée par le verre.

Comme cela ressort de la figure 2b, les lunettes comprennent deux cerclages **15a,b** reliés par un pontet **16,** assurant un passage **13** pour le nez du porteur. Chaque cerclage **15a,b** est doté d'un moyen de fixation **11a,b** des lunettes **1** sur la tête du porteur, en l'occurrence d'une branche de lunettes.

Plus précisément, chaque cerclage **15a,b** comprend un bord latéral **18a,b** et un bord interne **17a,b,** une branche **11a,b** étant montée sur lesdits premiers et seconds bord latéraux **18a,b** du cerclage **15a,b.** Chaque cerclage **15a,b** comprend une unité optique de type verre **4a,b.** Les cerclages **15a,b** et l'unité optique **4a,b** de type verre forment ensemble la face **10** de la lunette **1.**

Selon l'invention, les lunettes **1** comprennent un module d'émission **2** et un élément de renvoi géométrique de l'information visuelle **3** qui peut être un miroir. L'information visuelle (qui sera appelée dans ce qui suit aussi « l'image ») émise par le module d'émission **2** subit une transformation optique par l'intermédiaire d'un élément de transformation optique **5,** en l'occurrence une lentille qu'elle traverse avant d'arriver sur ledit élément de renvoi géométrique **3.** L'image est projeté sur la face interne de l'unité optique **4a** de type verre de lunettes, d'où elle est réfléchie dans l'œil **7** du porteur des lunettes. Ledit élément de transformation optique **5** permet, d'une part, d'agrandir l'image, et, d'autre part, de corriger les aberrations optiques après réflexion sur la face intérieure du verre de lunettes **4a.** Ledit élément de transformation optique **5** peut être une lentille (ou plusieurs lentilles positionnées entre le module d'émission **2** et l'élément de renvoi géométrique **3),** ou il peut être intégré dans ledit élément de renvoi géométrique **3** qui peut être un miroir asphérique.

L'élément de renvoi géométrique **3** peut être fixé sur l'unité optique **4a** à l'aide d'un point de fixation **9.**

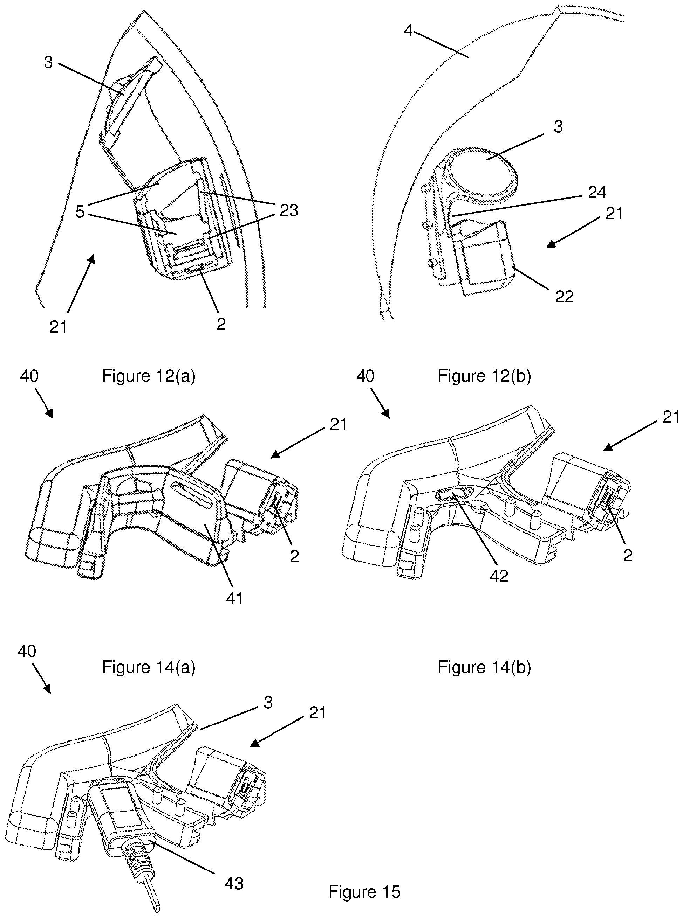

Le module d'émission **2** et l'élément de transformation optique **5** peuvent être intégrés dans un même boitier ou bloc, qui sera appelé ici « bloc optique » ; il porte le repère **21** sur la figure 2c. La figure 12 montre deux vues de ce bloc optique : en coupe longitudinale (figure 12(a)) et en perspective (figure 12(b)), avec le capot **22** en place. Dans ce mode de réalisation le bloc optique **21** comprend l'afficheur **2,** deux lentilles **5** optiques séparées par des entretoises **23** mécaniques, et un miroir **3** relié à un élément **24** mécanique de positionnement et de protection.

Dans le mode de réalisation de la figure 2 le module d'émission **2** est monté en partie basse d'un premier bord interne **14a** de la face **10,** alors que l'élément de renvoi géométrique **3** est monté en partie haute dudit premier bord interne **14a.**

Dans le cas où les lunettes ont une monture présentant un cerclage, les bords internes **17a,b** du cerclage peuvent coïncider avec les bords internes **14a,b** de la face, et les bords latéraux **18a,b** du cerclage peuvent coïncider avec les bords latéraux **12a,b** de la face. Les branches **11a,b** peuvent être montées sur les premières et deuxièmes bords latéraux **12a,b** de la face ou sur les premiers ou deuxième bords latéraux **18a,b** du cerclage, ou peuvent être fixés à un autre endroit sur la face **10,** notamment sur le cerclage **15a,b** ou directement sur l'unité optique de type verre **4.**

Les composants et cartes électroniques pour le pilotage du module d'émission d'information visuelle **2** et/ou les éléments de stockage d'énergie électrique (typiquement une ou plusieurs batteries, non montrées sur les figures) qui alimente(nt) l'électronique de pilotage du module d'émission **2** et/ou ledit module d'émission peuvent être logés dans un boitier électronique **8** et/ou dans l'une et/ou l'autre des branche **11a,b** de lunettes et connectés par un câble flexible (appelé couramment un « flex »), non montré sur les figures.

Dans un mode de réalisation qui peut être combiné avec tous les autres modes de réalisation décrits ici, ladite face **10** et/ou ladite unité optique de type verre **4** comprend une cellule photovoltaïque semi-transparente qui alimente, directement ou par l'intermédiaire des batteries, l'électronique de pilotage et/ou ledit module d'émission **2** d'information visuelle. De telles cellules photovoltaïques semi-transparentes sont connues dans l'état de la technique.

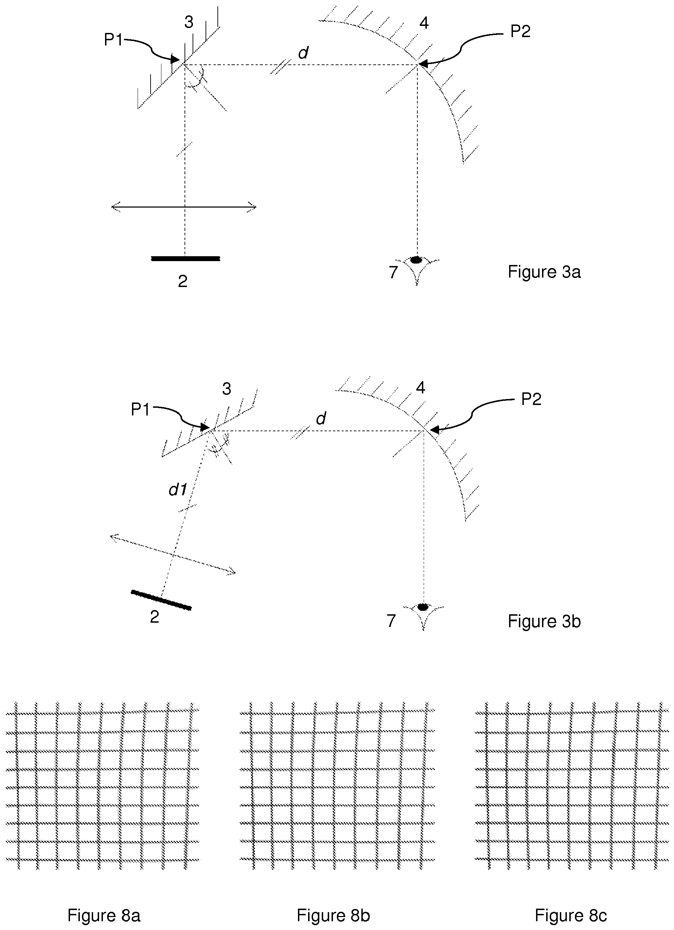

La figure 3 montre de manière schématique et simplifiée l'optique géométrique en 2D du système d'affichage des lunettes selon l'invention, pour différents réglages du module d'émission **1** (avec son élément de transformation optique **5)** et de l'élément de renvoi géométrique **3** (figures 3a et 3b). Lors de ces réglages la distance *d* entre le point d'impact P1 sur l'élément de renvoi géométrique **3** du rayon optique incident en provenance de l'élément d'émission d'information visuelle **2,** d'une part, et le point de départ P2 du rayon optique réfléchi par l'unité optique **4** reste avantageusement constante, et l'angle de réflexion sur l'unité optique **4** reste avantageusement constant. Cette figure illustre la possibilité de modifier le positionnement du module d'émission **2** lors de la conception des lunettes ou lors du réglage fin de la position du point P2 sur l'unité optique **4.** Avantageusement, au cours de ces réglages la longueur *d1* ne change pas significativement, afin de ne pas modifier la focalisation de l'image provenant du module **2.**

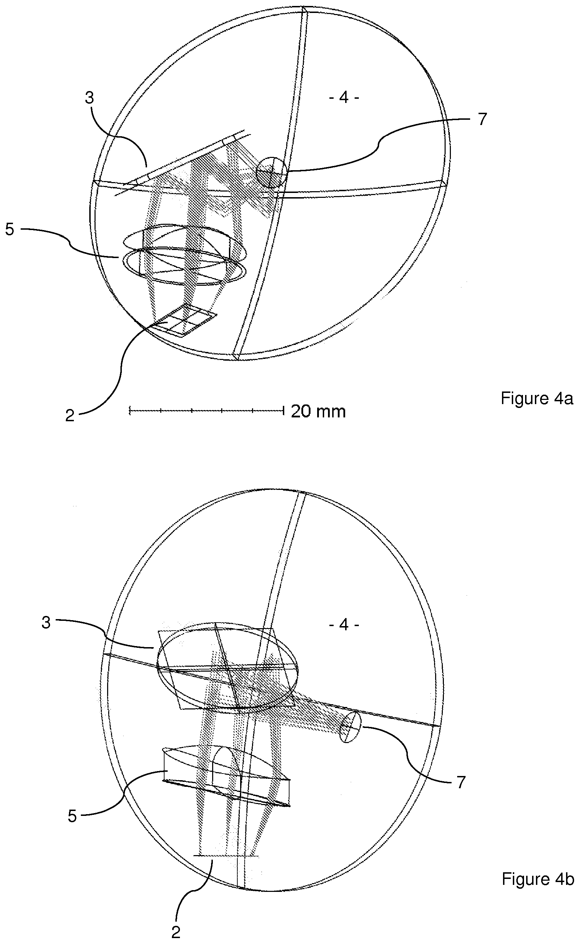

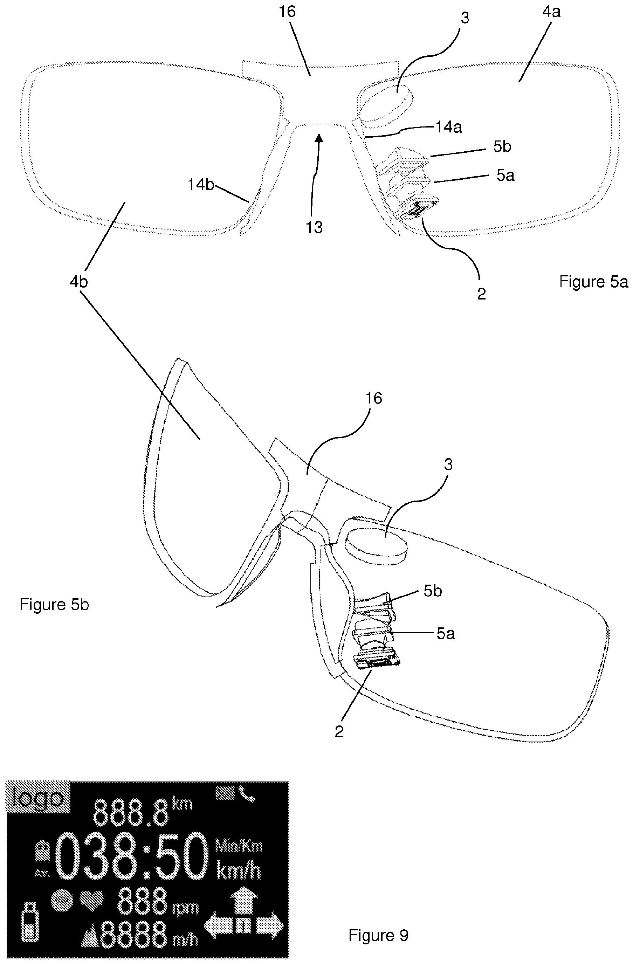

La figure 4 montre de manière schématique et simplifiée l'optique géométrique en 3D du système d'affichage des lunettes selon l'invention, avec deux vues différentes (figures 4 a et 4b). Elle illustre le rôle de l'élément de transformation optique **5** qui est ici une lentille, mais qui peut, dans une variante (illustrée sur la figure 5), comprendre deux lentilles.

La figure 5 montre de manière partielle des lunettes selon l'invention (les branches et le cerclage ont été omis pour ne pas surcharger la figure) dans lesquelles l'élément de transformation optique de l'information visuelle générée par le module d'émission **2** comprend deux lentilles **5a,b.** La figure 5b est tournée de 45° par rapport à la figure 5a.

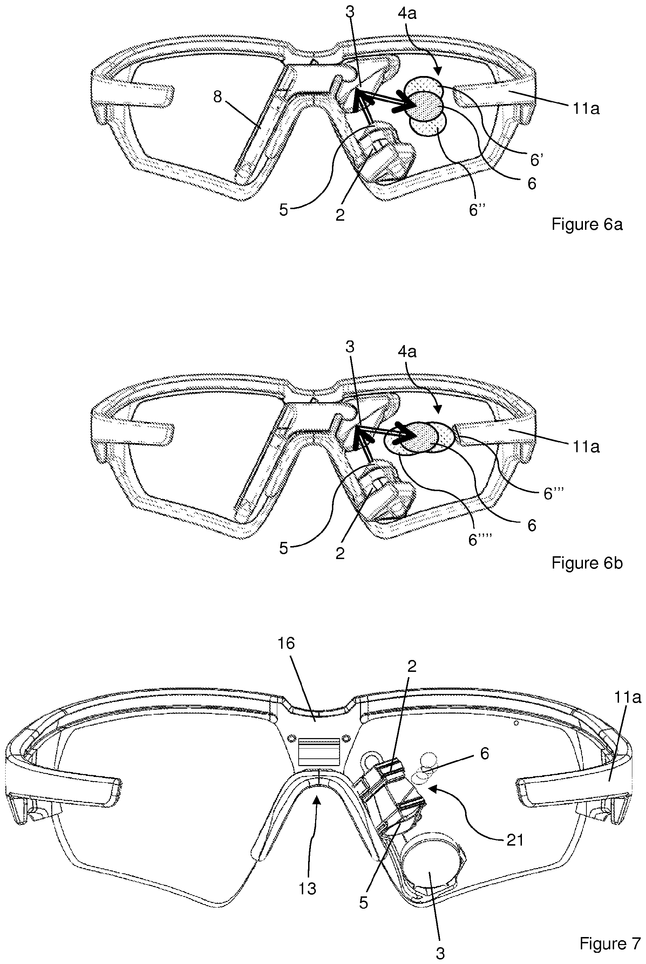

La figure 6 montre les lunettes de la figure 2 dans lesquelles la zone cible **6** est décalée. Sur la figure 6a la zone cible **6** est décalée vers le haut (zone cible **6')** ou vers le bas (zone cible **6"),** sur la figure 6b elle est déplacée latéralement vers l'extérieur (zone cible **6'''**) ou vers l'intérieur (zone cible **6"").** On peut aussi envisager un déplacement qui combine ces deux types de déplacement. Le choix du positionnement de la zone cible **6** sur la surface de l'unité optique **4** se fait en fonction de l'utilisation prévue des lunettes. Le réglage de cette position peut être fait en usine ou par l'opticien, ou encore par l'utilisateur lui-même. Dans un mode de réalisation particulier l'élément de renvoi géométrique **3** est monté sur un support réglable (non montré sur les figures) à l'aide d'un organe de commande (non montré sur les figures) permettant de translater ledit élément de renvoi géométrique **3** de quelques micromètres en gardant de préférence un angle constant entre l'afficheur **2** et la surface de l'unité optique **4** de type verre.

La figure 7 montre des lunettes selon l'invention dans lesquelles la configuration de l'afficheur **2** et du miroir **3** est inversée par rapport au mode de réalisation de la figure 2 : l'afficheur **2** se trouve en partie haute (proche de l'arcade sourcilière), le miroir **3** en partie basse.

Les lunettes selon l'invention peuvent être réalisées avec ou sans cerclage, ou avec un cerclage partiel (par exemple uniquement en haut ou uniquement en bas). Si les lunettes n'ont pas de cerclage, la face **10** est formé par l'unité optique **4a,b** de type verre, comme sur la figure 1. Le pontet **16** peut être présent ou non, et l'unité optique **4** peut être constituée par une pièce unique qui laisse le passage **13** pour le nez, comme dans le mode de réalisation montré sur la figure 1. De même, la monture peut présenter des plaquettes (non montrées sur les figures) proches du passage **13** pour le nez, afin de stabiliser les lunettes sur le nez du porteur ; ces plaquettes font alors partie de la face **10.** Tous ces types de lunettes et de montures sont connues en tant que telles, et il est une caractéristique (et un avantage) de la présente invention qu'elle peut être réalisée avec des montures de type courant, ou au moins avec des montures qui rappellent, sur un plan esthétique, les montures de type courant. Les principales contraintes sont les suivantes : la monture ou la face doit effectivement permettre de disposer le module d'émission et l'élément de renvoi géométrique en partie haute ou basse d'un bord interne de la face, et les lunettes doivent être adaptés à accueillir, d'une part, un élément de stockage d'énergie électrique et, d'autre part, l'électronique de pilotage du module d'émission. Pour atteindre ces buts il peut par exemple être nécessaire de choisir des branches **11** de forme et/ou taille particulière, permettant d'aménager un logement pour accueillir ledit élément de stockage d'énergie et/ou ladite électronique de pilotage, et/ou de prévoir un boitier électronique **8.**

On peut prévoir de nombreuses variantes dans l'exécution de l'invention ; ces variantes peuvent être combinées avec tous les modes de réalisation décrites ici, et peuvent être combinées entre elles.

A titre d'exemple, des couches optiques déposées en surfaces de l'élément de renvoi géométrique **3** et/ou du verre de lunettes (type dichroïque ou antireflet) peuvent améliorer le taux de réflexion en fonction des longueurs d'onde d'émission de l'afficheur et diminuer les réflexions parasites.

Pour augmenter le contraste du système, les couches optiques sur la surface intérieure du verre peut être complétées par une couche réfléchissante de couleur complémentaire sur la face externe du verre, et/ou par une couche absorbante la couleur complémentaire, et/ou par le choix d'un verre absorbant la couleur complémentaire. Cela permet de réduire les réflexions parasites dans le verre, et d'augmenter le contraste. De la même façon, on peut teinter le verre dans la couleur complémentaire pour obtenir le même effet, et/ou pour ajouter une fonction de lunettes de soleil.

Les courbes de la surface interne et externe du verre peuvent être ajustées de façon à apporter une correction ophtalmologique au porteur de lunettes. La surface interne permet de corriger la vision de l'image virtuelle projetée par le dispositif d'affichage, et la combinaison de la surface interne et externe permet de corriger la vision naturelle du porteur de lunettes.

Le miroir peut être de forme quelconque, mais on préfère les formes sans angles, notamment la forme circulaire ou ovale, en laissant un champ libre suffisant pour la réflexion de l'image afin de diminuer son encombrement et d'être mieux intégré au support.

Il est possible de prévoir un moyen d'ajustement du point de focalisation entre le miroir et l'affichage avec un support mécanique du miroir, fixé de manière réglable sur le support de la monture. Ainsi, en vissant ou dévissant le miroir on permet au miroir d'être translaté de quelques micromètres en gardant un angle identique entre l'affichage et le verre des lunettes.

Il est également possible (en alternative ou en complément au précédent mode de réalisation) de prévoir un moyen d'ajustement du point de focalisation et de la dioptrie avec un support mécanique de l'afficheur, fixé de manière réglable sur le support de la monture. Ainsi, en vissant ou dévissant l'afficheur (et de préférence simultanément la lentille **5** ou les lentilles, montée(s) sur un même bloc optique **21** que l'afficheur **2)** on permet à l'afficheur **2** (et à sa ou ses lentille(s)) d'être translaté(s) de quelques micromètres, de manière à pouvoir ajuster le point de focalisation et de régler la dioptrie ; cela permet de compenser au moins partiellement certains défauts visuels de l'utilisateur, tels que la myopie ou l'hypermétropie.

On peut prévoir un système permettant de réguler la luminosité de l'afficheur **2.** Ce système peut être associé à un système électronique de capture de la luminosité ambiante, configuré pour réguler la luminosité de l'affichage en temps réel en fonction de l'ambiance extérieur.

Dans un mode de réalisation exemplaire, on a utilisé une monture de lunettes de type sport en base 8, comme cela ressort de la figure 2. Le module d'émission (un micro afficheur OLED monochrome à haute luminance avec un spectre centré sur 530 nm) était monté en partie basse du premier bord interne, le miroir en partie haute dudit premier bord interne. L'image de l'afficheur **2** traverse la lentille **5** de correction puis est renvoyé par le miroir plan jusqu'au verre de lunettes **4** qui réfléchit jusqu'à 20% de la lumière incidente en fonction du dépôt de surface appliqué. Le micro afficheur à haute luminance (jusqu'à 20 000 Cd/m²) et de fort contraste (1 :970 000) permet de garder un affichage suffisamment lumineux pour être visible par l'utilisateur même en environnement extérieur. Le contraste important permet de garder un fond très sombre (0,003 Cd/m²) en dehors des éléments affiché sur le verre de lunettes.

On peut également utiliser d'autres courbures de lunettes, par exemple base 6, base 7, base 9 ou base 13 ou d'autres courbures et formes.

On peut également utiliser un afficheur OLED couleur. Dans un mode de réalisation on a utilisé avec des lunettes sport du type de celles utilisées pour les figures 2 et 6 un afficheur OLED couleur de surface 3,1 mm x 3,6 mm avec 256 x 300 pixels et un miroir circulaire d'un diamètre de 10 mm. En tant qu'élément de transformation optique **5** on a utilisé deux lentilles asphériques en résine polyester optique OKP4 (indice optique n = 1,607 à une longueur d'onde de 546,1 nm). La figure 8 montre la projection d'une grille quadratique d'un champ total de 10° affichée par l'afficheur au point nominal de la pupille (figure 8b), à une distance latérale de - 2 mm (figure 8a) et à une distance latérale de + 2 mm (figure 8c). On note que l'image montre une très faible distorsion en position nominale, et ne se dégrade guère lorsque la position se déplace de ± 2 mm. Un tel système d'affichage est d'une qualité très satisfaisante pour afficher des signes alphanumériques (texte, séquences de chiffres représentant l'heure etc.) et des images. Dans ce mode de réalisation la position du centre d'affichage est d'environ 16° de convergence horizontale et d'environ 6° d'élévation au-dessus de l'horizon. Dans cette position l'utilisateur garde une bonne visibilité directe de son environnement sans être gêné par l'affichage, et peut aussi reconnaître facilement les séquences alphanumériques et pictogrammes qui lui donnent des informations sur sa vitesse, le dénivelé, les coordonnées GPS etc (voir la figure 9 pour un exemple d'affichage, reproduit ici en noir et blanc).

La demanderesse s'est rendu compte que dans les lunettes selon l'invention la qualité de rendu d'image du système optique dépend assez fortement de la précision de positionnement des lentilles optiques **5,** de l'afficheur **2,** du miroir **3** et du verre de lunettes **4** sur lequel est projetée l'image. Un basculement, un décentrement ou des contraintes et déformations de quelques dizaines de micromètres sur le bloc optique peut engendrer des aberrations optiques dont la principale conséquence est la netteté de l'image : ces aberrations conduisent à une déviation des rayons et donc des points de focalisation dans la pupille.

Pour remédier à ce problème, trois modes de réalisation particuliers ont été réalisés, qui prévoient des moyens de positionnement du bloc optique **21** par rapport au verre sans contraintes extérieures qui pourraient altérer la qualité de rendu de l'image. On a ainsi ajouté une fonction mécanique au verre de lunettes pour réduire les tolérances d'assemblage.

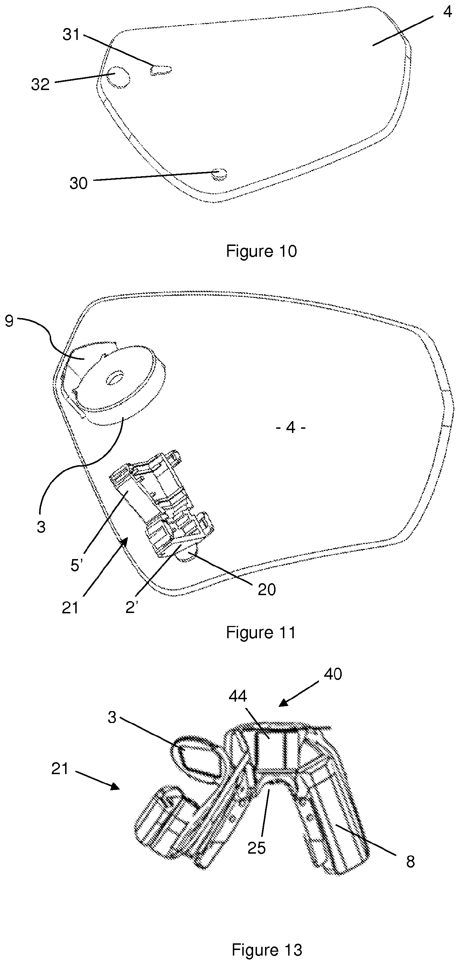

Dans un premier mode de réalisation, illustré sur la figure 10, les moyens de positionnement précités comprennent au moins un élément de positionnement mécanique **30, 31, 32** (tel qu'une butée ou nervure) formé directement sur le verre de lunettes **4,** ce qui facilite le positionnement et l'ajustement du bloc optique **21** (et éventuellement aussi le miroir 3) contre le verre **4** dans la position optimale.

Ces éléments de positionnement **30, 31** peuvent être venus de matière, en particulier être réalisés lors du moulage du verre de lunettes **4,** par exemple sous la forme de butées hyperstatiques moulées sur le verre pour maintenir le bloc optique **21** en position nominale. Dans ce cas le bloc optique **21** comporte des extrusions de type « femelles » aptes à coopérer avec ces éléments de positionnement. La coopération de ces éléments de positionnement et de ces extrusions femelles peut être notamment de type tenon et mortaise, ou encore de type à encliquetage élastique. Cette coopération permet de maintenir tout le bloc optique **21** avec la précision suffisante par rapport au verre **4.** De même, on peut prévoir un élément **32** de positionnement mécanique formé directement sur le verre de lunettes pour maintenir le miroir **3** en position nominale.

Dans un deuxième mode de réalisation, non montré sur les figures, on intègre au moins une embase dans l'unité optique de type verre de lunettes (typiquement par moulage), sur laquelle peut être fixé de manière précise (par exemple par encliquetage) le bloc optique (et possiblement aussi le miroir).

Dans un troisième mode de réalisation, illustré sur la figure 11, le bloc optique **21** est directement venu de matière avec l'unité optique de type verre **4.** Cela peut être réalisé par moulage. Dans une variante, on peut intégrer la fixation **9** du miroir dans l'unité optique de type verre **4.** Cela peut être réalisé par moulage.

En particulier, on peut réaliser un bloc optique **21** dans lequel on insère ensuite l'afficheur **2** et l'élément de transformation optique **5** (comprenant par exemple une ou plusieurs lentilles). Ce bloc optique **21** peut comprendre une embase (non montrée sur la figure) pour fixer l'élément de renvoi géométrique **3.** Ce bloc optique comprend avantageusement des moyens de maintien, en particulier amovible, qui permettent de maintenir les lentilles optiques **5** et/ou l'afficheur **2** et/ou le miroir **3** par rapport aux parois de ce bloc. Ces moyens de maintien peuvent être de tout type approprié, notamment tenon et mortaise, ou encore par encliquetage élastique.

Ces trois modes de réalisation, décrits immédiatement ci-dessus, permettent de s'affranchir des contraintes d'ajustement et de maintien des pièces mécaniques car le positionnement des éléments optiques (afficheur, lentilles et miroir) est directement effectué sur le verre de la lunette. De cette manière la précision de positionnement des éléments est assurée et la qualité de rendu d'image est optimale.

Un autre mode de réalisation est illustré, avec plusieurs variantes, sur les figures 13 à 15. Dans ce mode de réalisation, le pontet des lunettes intègre le bloc optique **21** ; cet ensemble est appelé ici module de pontet **40.** Il comprend le boitier électronique **8.** La figure 13 fait apparaître le miroir **3** qui est en position haute ; dans une variante (non montrée sur les figures) le bloc optique est inversé de manière à ce que le miroir soit en bas et l'afficheur en haut. La figure 14 montre deux vues d'en bas du module de pontet **40** ; la partie inférieure du capot du bloc optique **21** n'est pas représentée afin de montrer la position de l'afficheur OLED **2.**

Dans une variante très avantageuse, le module de pontet comprend une prise de connexion électrique **42** ; elle est visible sur la figure 14(b). Elle peut être protégée par un support de nez **41** amovible, visible sur la figure 14(a). Comme cela est montré sur la figure 15, ladite prise de connexion **42** peut recevoir un connecteur **43** pour transférer des données à l'afficheur et/ou pour recharger la batterie. Elle peut communiquer avec un module électronique qui peut se situer dans un boitier **44** sur le pontet et/ou dans le boitier électronique **8** latéral (la figure 13 montre les deux à la fois).

Ledit module électronique peut comprendre au moins microprocesseur configuré pour remplir au moins une fonction parmi les suivantes : la gestion de l'alimentation électrique et/ou du rechargement de la batterie, la fonction de module de communication sans fil (tel que BlueTooth). Le module électronique peut comprendre un capteur de proximité et//ou de lumière ambiante (et peut alors être configuré pour adapter automatiquement la luminosité du microafficheur au niveau de lumière ambiante), un ou plusieurs éléments de commande (tel qu'un bouton poussoir), un ou plusieurs éléments de signalisation (tel qu'une diode électroluminescente), un élément d'éclairage. Le bouton poussoir ou le capteur de proximité peut être configuré pour actionner la fonction marche / arrêt du micro-afficheur, ou une autre fonction de ce dernier.

Dans tous les modes de réalisation décrits, le support **25** pour le nez peut être réalisé de manière amovible pour pouvoir sélectionner un support dont la forme convient à la morphologie de l'utilisateur. Dans une variante (non montrée sur les figures) le support de nez **41** amovible fait partie du support de pontet **40.**

Les lunettes selon l'invention ont de nombreuses applications et utilisations, notamment dans le domaine professionnel, dans le domaine du sport, et de la vie urbaine et quotidienne. Ces différentes applications peuvent nécessiter une adaptation de la monture des lunettes, de la forme des verres, de la localisation précise du module d'émission **2** et de l'élément de renvoi géométrique **3** (en position haute ou base par rapport au bord interne notamment), de la localisation de la zone cible **6,** du réglage optique (distance apparente de la projection). Elles peuvent aussi nécessiter l'interfaçage des lunettes avec un microprocesseur externe, par exemple par une voie de communication sans fil (par exemple selon le standard Bluetooth™).

Dans le domaine professionnel, les lunettes **1** selon l'invention peuvent être utilisées par des personnes réalisant différentes taches dans un atelier de production, dans un atelier de conditionnement, dans un entrepôt, dans un environnement de logistique : il s'agit ici de transmettre des informations à l'utilisateur et/ou de le guider lors de la réalisation de ses tâches tout en lui laissant ses deux mains libres. Par exemple, lorsque l'utilisateur se déplace dans un entrepôt avec un chariot pour prélever des colis dans des stations de stockage différentes, les lunettes selon l'invention peuvent lui afficher le code du colis, et/ou la localisation de la station suivante. Pour un opérateur de production, les lunettes peuvent afficher une procédure à suivre pour exécuter des opérations, ou des paramètres à respecter, ou des consignes ou messages d'alerte à prendre en compte.

Les lunettes **1** selon l'invention peuvent être utilisées par le personnel médical ou paramédical dans un établissement de santé pour leur afficher des informations utiles (listes de produits, informations sur le patient, résultats d'analyses, paramètres physiques, chimiques ou physico-chimiques importants, consignes) sans qu'ils aient besoin d'utiliser leurs mains pour manipuler des documents papier ou des écrans d'affichage.

Les lunettes **1** selon l'invention peuvent être utilisées par le personnel de l'aviation pour afficher des informations importantes pour le pilotage de l'aéronef. A titre d'exemple, ces informations peuvent provenir du système d'alerte de trafic et d'évitement de collision (TCAS, « Traffic alert and Collision Avoidance System »). Elles peuvent également utilisées par le personnel d'intervention d'urgence (pompiers, policiers, dépannage technique) pour leur notifier des informations par voie visuelle.

Les lunettes **1** selon l'invention peuvent être portées par des sportifs (par exemple lors de la course à pied, de la pratique de vélo, du ski ou du snowboard) pour leur afficher en cours d'exercice des informations utiles, par exemple leur fréquence cardiaque, leur vitesse, la distance parcourue ou restant à parcourir, des informations chronométriques, altimétriques, géographiques, topographiques, etc., y compris des indications de direction et des données GPS, ainsi que des informations touristiques (par exemple relatives à la station de ski : heure de fermeture d'une remontée, temps d'attente etc.). Pour les masques de plongé, outre l'information sur la fréquence cardiaque et des informations chronométriques c'est la profondeur de plongée, et des informations relatives aux paliers de décompression qui peuvent avantageusement être affichées.

Une autre utilisation des lunettes **1** selon l'invention dans un contexte sportif est l'utilisation par des arbitres sportifs, par exemple entre l'arbitre central et l'arbitre assistant.

Dans la vie urbaine ou quotidienne les lunettes **1** selon l'invention peuvent notamment être utilisées pour afficher des informations chronométriques et géographiques, des informations de GPS, des informations météorologiques, des informations sur la pollution de l'air (indice de pollution), sur les points d'intérêt touristiques (monuments, points d'eau, disponibilité de toilettes). Les lunettes selon l'invention peuvent également être utilisées dans le cadre de jeux, notamment en réalité augmentée (type Pokemon™ GO par exemple), et pour afficher des informations liées aux réseaux sociaux (tels que : Twitter™, Facebook™, Instagram™, Snapchat™, WeChat™, WhatsApp™, Line™) ou la notification ou le contenu de courriels et messages de type sms.

## Revendications

1. Lunettes (1) comprenant une face (10) pourvue d'au moins une unité optique (4) de type verre, ladite face définissant un passage (13) pour le nez de l'utilisateur, ledit passage pour le nez étant délimité par des premier et second bords (14a,b) dits internes de la face, tournés respectivement vers les premier et second bords latéraux (12a,b) de la face (10),
lesdites lunettes (1) comprenant en outre :
- un module d'émission (2) d'une information visuelle, comprenant un élément d'émission de ladite information visuelle de type afficheur,
- optionnellement un élément de transformation optique (5) de ladite information visuelle émise, notamment de type lentille,
- un élément de renvoi géométrique (3) de l'information visuelle transformée, de type miroir, apte à renvoyer ladite information visuelle transformée vers une zone cible (6) de ladite unité optique (4) de type verre,
**caractérisées en ce que**
- ledit module d'émission (2) est disposé en partie basse ou haute d'un premier bord interne (14a) de la face (10), alors que l'élément de renvoi géométrique (3) est disposé en partie haute ou basse dudit premier bord interne (14a), sachant que lorsque ledit module d'émission (2) est disposé en partie basse dudit premier bord interne (14a) de la face, alors l'élément de renvoi géométrique (3) est disposé en partie haute dudit premier bord interne (14a), et lorsque ledit module d'émission (2) est disposé en partie haute d'un premier bord interne (14a) de la face, alors l'élément de renvoi géométrique (3) est disposé en partie basse dudit premier bord interne (14a).

2. Lunettes (1) selon la revendication 1, **caractérisées en ce que** ladite face (10) comprend deux cerclages (15a,b) et un pontet (16) reliant lesdits cerclages, chaque cerclage (15a,b) comprenant des moyens de fixation, notamment amovible, pour ladite unité optique (4) de type verre, et chaque cerclage (15a,b) comprenant un bord latéral et un bord interne, formant respectivement un desdits bords latéraux et un desdits bords internes de la face (10).

3. Lunettes (1) selon la revendication 1, **caractérisées en ce que** ladite face (10) comprend une unique unité optique (4), les bords latéraux de ladite unité optique formant lesdits bords latéraux de la face (10), lesdites branches (11a,b) étant montées directement sur les bords latéraux de ladite unité optique (4).

4. Lunettes (1) selon l'une quelconque des revendications 1 à 3, **caractérisées en ce que** la zone cible (6) est située de préférence en partie médiane dudit premier bord latéral (12a).

5. Lunettes (1) selon l'une quelconque des revendications 1 à 4, **caractérisées en ce que** la surface principale de l'élément d'émission (2) de type afficheur est oblique (par exemple sensiblement perpendiculaire) à la surface principale de ladite face (10).

6. Lunettes (1) selon l'une quelconque des revendications 1 à 5, **caractérisées en ce que** ledit élément d'émission d'information visuelle est un afficheur OLED.

7. Lunettes (1) selon l'une quelconque des revendications 1 à 6, **caractérisées en ce qu'**elles sont intégrées, de manière fixe ou pivotante, dans un casque de protection (19) de la tête.

8. Lunettes (1) selon l'une quelconque des revendications 1 à 7, **caractérisées en ce que** ledit élément de transformation optique (5) fait partie dudit élément de renvoi géométrique (3).

9. Lunettes (1) selon l'une quelconque des revendications 1 à 8, **caractérisées en ce qu'**elles comprennent en outre un bloc optique (21), ledit bloc comprenant des moyens de maintien, notamment amovible, pour le module d'émission (2) et/ou l'élément de transformation optique et/ou l'élément de renvoi géométrique, ladite unité optique (4) étant pourvue de moyens de positionnement (30, 31), aptes à positionner ledit bloc optique par rapport à ladite unité optique.

10. Lunettes (1) selon la revendication 9, **caractérisées en ce que** les moyens de positionnement comprennent au moins un élément de positionnement (30, 31) venu de matière, notamment venu de moulage, avec ladite unité optique (4), ledit élément de positionnement étant apte à coopérer avec ledit bloc optique (21), notamment par une liaison de type tenon et mortaise, ou encore de type à encliquetage élastique.

11. Lunettes (1) selon la revendication 9, **caractérisées en ce que** ledit bloc optique (21) est venu de matière, notamment venu de moulage, avec ladite unité optique (4).

12. Monture appartenant à des lunettes selon l'une quelconque des revendications 2 à 14, ladite monture comprenant deux cerclages (15) et un pontet (16) reliant lesdits cerclages, chaque cerclage comprenant des moyens de fixation, notamment amovible, pour une unité optique de type verre,
ladite monture comprenant en outre :
- un module d'émission (2) d'une information visuelle, comprenant un élément d'émission de ladite information visuelle de type afficheur
- un élément de transformation optique (5) de ladite information visuelle émise, notamment de type lentille
- un élément de renvoi géométrique (3) de l'information visuelle transformée, de type miroir, apte à renvoyer ladite information visuelle transformée vers une zone cible dudit verre,
ledit module d'émission étant monté en partie basse du bord interne d'un premier cerclage, alors que l'élément de renvoi est monté en partie haute dudit bord interne dudit premier cerclage,
la zone cible étant située en partie médiane du bord latéral dudit premier cerclage,
la surface principale de l'élément d'émission de type afficheur étant sensiblement perpendiculaire à la surface principale dudit premier cerclage.

13. Monture selon la revendication 12, **caractérisé en ce que** ledit pontet (16) fait partie d'un module de pontet (40) sur lequel est fixé ledit bloc optique (21).

14. Monture selon la revendication 13, **caractérisé en ce que** ledit module de pontet (40) comprend une prise (42) de connexion électrique.

15. Utilisation des lunettes selon l'une quelconque des revendications 1 à 11 pour transmettre des informations visuelles à l'utilisateur et/ou de le guider lors de la réalisation de ses tâches ou activités, en particulier dans un entrepôt, un atelier de production ou de conditionnement, un laboratoire, un service hospitalier, un poste de conduite de véhicule terrestre (notamment un véhicule de livraison de marchandises, ou d'intervention d'urgence), maritime ou d'aéronef, lors d'activités sportives (notamment pour la course à pied, la pratique du vélo, du ski ou du snowboard, la plongée sous-marine).

## Patentansprüche

1. Brillen (1), eine Seite (10) umfassend, die mit mindestens einer optischen Einheit (4) in der Art von Glas versehen ist, wobei die Seite einen Durchlass (13) für die Nase des Nutzers definiert, wobei der Durchlass für die Nase durch erste und zweite sogenannte innere Ränder (14a, b) der Seite begrenzt ist, die jeweils zu den ersten und zweiten seitlichen Rändern (12a, b) der Seite (10) ausgerichtet sind,
wobei die Brillen (1) weiter Folgendes umfassen:
- ein Sendemodul (2) einer visuellen Information, ein Sendeelement der visuellen Information in der Art einer Anzeige umfassend,
- optional ein optisches Umwandlungselement (5) der gesendeten visuellen Information, insbesondere in der Art einer Linse,
- ein geometrisches Weiterleitungselement (3) der umgewandelten visuellen Information, in der Art eines Spiegels, der imstande ist, die umgewandelte visuelle Information in eine Zielzone (6) der optischen Einheit (4) in der Art eines Glases weiterzuleiten,
**dadurch gekennzeichnet, dass**
- das Sendemodul (2) im unteren oder oberen Teil eines ersten inneren Randes (14a) der Seite (10) angeordnet ist, während das geometrische Weiterleitungselement (3) im oberen oder unteren Teil des ersten inneren Randes (14a) angeordnet ist, wobei festzuhalten ist, dass wenn das Sendemodul (2) im unteren Teil des ersten inneren Randes (14a) der Seite angeordnet ist, das geometrische Weiterleitungselement (3) im oberen Teil des ersten inneren Randes (14a) angeordnet ist, und wenn das Sendemodul (2) im oberen Teil eines ersten inneren Randes (14a) der Seite angeordnet ist, das geometrische Weiterleitungselement (3) im unteren Teil des ersten inneren Randes (14a) angeordnet ist.

2. Brillen (1) nach Anspruch 1, **dadurch gekennzeichnet, dass** die Seite (10) zwei Umreifungen (15a, b) und eine Brücke (16) umfasst, die die beiden Umreifungen verbindet, wobei jede Umreifung (15a, b) insbesondere abnehmbare Befestigungsmittel für die optische Einheit (4) in der Art von Glas umfasst, und jede Umreifung (15a, b) einen seitlichen Rand und einen inneren Rand umfasst, die jeweils einen der seitlichen Ränder und einen der inneren Ränder der Seite (10) bilden.

3. Brillen (1) nach Anspruch 1, **dadurch gekennzeichnet, dass** die Seite (10) eine einzige optische Einheit (4) umfasst, wobei die seitlichen Ränder der optischen Einheit die seitlichen Ränder der Seite (10) bilden, wobei die Bügel (11a, b) direkt an den seitlichen Rändern der optischen Einheit (4) montiert sind.

4. Brillen (1) nach einem der Ansprüche 1 bis 3, **dadurch gekennzeichnet, dass** die Zielzone (6) vorzugsweise im mittleren Teil des ersten seitlichen Randes (12a) gelegen ist.

5. Brillen (1) nach einem der Ansprüche 1 bis 4, **dadurch gekennzeichnet, dass** die Hauptoberfläche des Sendeelements (2) in der Art Anzeige schräg (beispielsweise im Wesentlichen senkrecht) zur Hauptoberfläche der Seite (10) ist.

6. Brillen (1) nach einem der Ansprüche 1 bis 5, **dadurch gekennzeichnet, dass** das Sendeelement einer visuellen Information eine OLED-Anzeige ist.

7. Brillen (1) nach einem der Ansprüche 1 bis 6, **dadurch gekennzeichnet, dass** sie in fester oder schwenkbarer Form in einem Schutzhelm (19) des Kopfes integriert sind.

8. Brillen (1) nach einem der Ansprüche 1 bis 7, **dadurch gekennzeichnet, dass** das optische Umwandlungselement (5) Teil des geometrischen Weiterleitungselements (3) ist.

9. Brillen (1) nach einem der Ansprüche 1 bis 8, **dadurch gekennzeichnet, dass** sie weiter einen optischen Block (21) umfassen, wobei der Block insbesondere abnehmbare Haltemittel für das Sendemodul (2) und/oder das optische Umwandlungselement und/oder das geometrische Weiterleitungselement umfasst, wobei die optische Einheit (4) mit Positionierungsmitteln (30, 31) versehen ist, die imstande sind, den optischen Block in Bezug auf die optische Einheit zu positionieren.

10. Brillen (1) nach Anspruch 9, **dadurch gekennzeichnet, dass** die Positionierungsmittel mindestens ein Positionierungselement (30, 31), in einem Stück, insbesondere durch Gießen, mit der optischen Einheit (4) umfassen, wobei das Positionierungselement imstande ist, mit dem optischen Block (21), insbesondere durch eine Verbindung in der Art Nut und Feder, oder aber in der Art durch elastisches Einrasten zusammenzuwirken.

11. Brillen (1) nach Anspruch 9, **dadurch gekennzeichnet, dass** der optische Block (21) in einem Stück, insbesondere durch Gießen, mit der optischen Einheit (4) ist.

12. Fassung, die Brillen nach einem der Ansprüche 2 bis 14 angehört, wobei die Fassung zwei Umreifungen (15) und eine Brücke (16) umfasst, die die Umreifungen verbindet, wobei jede Umreifung insbesondere abnehmbare Befestigungsmittel für eine optische Einheit in der Art von Glas umfasst, wobei die Fassung weiter Folgendes umfasst:
- ein Sendemodul (2) einer visuellen Information, ein Sendeelement der visuellen Information in der Art einer Anzeige umfassend,
- ein optisches Umwandlungselement (5) der gesendeten visuellen Information, insbesondere in der Art einer Linse,
- ein geometrisches Weiterleitungselement (3) der umgewandelten visuellen Information, in der Art eines Spiegels, der imstande ist, die umgewandelte visuelle Information in eine Zielzone der optischen Einheit in der Art eines Glases weiterzuleiten,
wobei das das Sendemodul im unteren Teil des inneren Randes einer ersten Umreifung angeordnet ist, während das Weiterleitungselement im oberen Teil des inneren Randes der ersten Umreifung angeordnet ist,
wobei die Zielzone im mittleren Teil des seitlichen Randes der ersten Umreifung gelegen ist, wobei die Hauptoberfläche des Sendeelements in der Art Anzeige im Wesentlichen senkrecht zur Hauptoberfläche der ersten Umreifung ist.

13. Fassung nach Anspruch 12, **dadurch gekennzeichnet, dass** die Brücke (16) Teil eines Brückenmoduls (40) ist, auf dem der optische Block (21) befestigt ist.

14. Fassung nach Anspruch 13, **dadurch gekennzeichnet, dass** das Brückenmodul (40) eine Anschlussbuchse (42) zum elektrischen Anschluss umfasst.

15. Verwendung von Brillen nach einem der Ansprüche 1 bis 11, zur Übertragung visueller Informationen an den Nutzer und/oder um ihn bei der Ausführung seiner Aufgaben oder Tätigkeiten, insbesondere in einem Lager, einer Produktions- oder Konditionierungswerkstatt, einem Labor, einer Krankenhausabteilung, einem Führerstand eines Land-(insbesondere eines Lieferfahrzeugs für Waren, oder Notfallmaßnahme), See- oder Luftfahrzeugs, bei sportlichen Aktivitäten (insbesondere beim Laufen, Radfahren, Skifahren oder Snowboarden, Tauchen) zu leiten.

## Claims

1. Spectacles (1) including a face (10) provided with at least one lens-type optical unit (4), said face defining a passage (13) for the user's nose, said passage for the nose being defined by first and second so-called internal edges (14a,b) of the face, respectively facing the first and second lateral edges (12a,b) of the face (10),
said spectacles (1) also including:
- a module for emitting (2) visual information, including an element for emitting said display-type visual information,
- optionally an element for optical transformation (5) of said emitted visual information, in particular of the lens type,
- a mirror-type element for geometric reflection (3) of the transformed visual information, capable of reflecting said transformed visual information to a target area (6) of said lens-type optical unit (4),
**characterized in that**
- said emitting module (2) is arranged at the bottom or top portion of a first internal edge (14a) of the face (10), while the geometric reflection element (3) is arranged at the top or bottom portion of said first internal edge (14a), with the understanding that when said emitting module (2) is arranged at the bottom portion of said first internal edge (14a) of the face, then the geometric reflection element (3) is arranged at the top portion of said first internal edge (14a), and when said emitting module (2) is arranged at the top portion of a first internal edge (14a) of the face, then the geometric reflection element (3) is arranged at the bottom portion of said first internal edge (14a).

2. Spectacles (1) according to claim 1, **characterized in that** said face (10) includes two rims (15a,b) and a bridge (16) connecting said rims, each rim (15a,b) including attachment means, in particular removable, for said lens-type optical unit (4), each rim (15a,b) including a lateral edge and an internal edge, respectively forming one of said lateral edges and one of said internal edges of the face (10).

3. Spectacles (1) according to claim 1, **characterized in that** said face (10) includes a single optical unit (4), the lateral edges of said optical unit forming said lateral edges of the face (10), said stems (11a,b) being mounted directly on the lateral edges of said optical unit (4).

4. Spectacles (1) according to any one of claims 1 to 3, **characterized in that** the target area (6) is preferably located at the median portion of said first lateral edge (12a).

5. Spectacles (1) according to any one of claims 1 to 4, **characterized in that** the main surface of the display-type emitting element (2) is oblique (for example substantially perpendicular) to the main surface of said face (10).

6. Spectacles (1) according to any one of claims 1 to 5, **characterized in that** said visual information emitting element is an OLED display.

7. Spectacles (1) according to any one of claims 1 to 6, **characterized in that** they are integrated, in a fixed or pivotable manner, in a helmet for protecting (19) the head.

8. Spectacles (1) according to any one of claims 1 to 7, **characterized in that** said optical transformation element (5) is part of said geometric reflection element (3).

9. Spectacles (1) according to any one of claims 1 to 8, **characterized in that** they also include an optical block (21), said block including holding means, in particular removable, for the emitting module (2) and/or the optical transformation element and/or the geometric reflection element, said optical unit (4) being provided with positioning means (30, 31), capable of positioning said optical block with respect to said optical unit.

10. Spectacles (1) according to claim 9, **characterized in that** the positioning means include at least one positioning element (30, 31) integrated, in particular integrally molded, with said optical unit (4), said positioning element being capable of cooperating with said optical block (21), in particular by a mortise and tenon-type connection, or by a resilient snap-lock connection.

11. Spectacles (1) according to claim 9, **characterized in that** said optical block (21) is integrated, in particular integrally molded, with said optical unit (4).

12. Frame belonging to spectacles according to any one of claims 2 to 14, said frame including two rims (15) and a bridge (16) connecting said rims, each rim including attachment means, in particular removable, for a lens-type optical unit,
said frame also including:
- a visual information emitting module (2), including a display-type visual information emitting element,
- an element for optical transformation (5) of said emitted visual information, in particular of the lens type,
- a mirror-type element for geometric reflection (3) of the transformed visual information, capable of sending said transformed visual information to a target area of said lens,
said emitting module being mounted at the bottom portion of the internal edge of a first rim, while the reflection element is mounted at the top portion of said internal edge of said first rim,
the target area being located in the median portion of the lateral edge of said first rim,
the main surface of the display-type emitting element being substantially perpendicular to the main surface of said first rim.

13. Frame according to claim 12, **characterized in that** said bridge (16) forms part of a bridge module (40) to which said optical block (21) is attached.

14. Frame according to claim 16, **characterized in that** said bridge module (40) includes an electrical connection socket (42).

15. Use of the spectacles according to any one of claims 1 to 11 for emitting visual information to the user and/or for guiding the user in the execution of his or her tasks or activities, in particular in a warehouse, a production facility or packaging plant, a laboratory, a hospital, a driver's cabin of a ground vehicle (in particular a goods delivery vehicle, or an emergency intervention vehicle), a watercraft or an aircraft, during athletic activities (in particular running, bicycling, skiing or snowboarding, or scuba diving).
